(19) **Europäisches Patentamt**
**European Patent Office**
**Office européen des brevets**

(11) **EP 3 671 997 B1**

(12) **EUROPEAN PATENT SPECIFICATION**

(45) Date of publication and mention
of the grant of the patent:
**09.04.2025 Bulletin 2025/15**

(21) Application number: **18214867.6**

(22) Date of filing: **20.12.2018**

(51) International Patent Classification (IPC):
**H02B 13/065** (2006.01)

(52) Cooperative Patent Classification (CPC):
**H02B 13/065**

(54) **SWITCHGEAR MONITORING SYSTEM**

ÜBERWACHUNGSSYSTEM EINER SCHALTANLAGE

SYSTÈME DE SURVEILLANCE D'UN APPAREILLAGE DE COMMUTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.06.2020 Bulletin 2020/26**

(73) Proprietor: **ABB Schweiz AG
5400 Baden (CH)**

(72) Inventors:
• **Gebhardt, Jörg
55130 Mainz (DE)**
• **Wildermuth, Stephan
69514 Laudenbach (DE)**

(74) Representative: **Maiwald GmbH
Grünstraße 25
40212 Düsseldorf (DE)**

(56) References cited:
EP-A1- 3 299 783      DE-A1- 102014 102 509
US-A1- 2009 216 472    US-A1- 2011 156 918

US-A1- 2014 145 849    US-A1- 2014 334 519

• DAKIN THOMAS W.: "Electrical Insulation
Deterioration Treated as a Chemical Rate
Phenomenon", 31 January 1948 (1948-01-31),
XP055826581, Retrieved from the Internet
<URL:https://ieeexplore.ieee.org/stampPDF/
getPDF.jsp?tp=&arnumber=5059649&ref=>
[retrieved on 20210721]
• - ABB: "Infrared Temperature Monitoring System
in Medium Voltage Switchgear", 10 August 2007
(2007-08-10), XP093019115, Retrieved from the
Internet <URL:https://library.e.abb.com/public/
1a654d1a6a3b901ac1257333003479ff/
AG_PS103-EN-08_2007.pdf> [retrieved on
20230130]
• ANONYMOUS -: "Linear interpolation -
Wikipedia", 11 October 2018 (2018-10-11),
XP093019771, Retrieved from the Internet
<URL:https://en.wikipedia.org/w/index.php?
title=Linear_interpolation&oldid=863583343>
[retrieved on 20230201]

EP 3 671 997 B1

**Description**

FIELD OF THE INVENTION

The present invention relates to a switchgear monitoring system.

The term switchgear is used here for any device that is used to open and/or close an electrically conductive line, on order to interrupt and/or establish an electrical contact. Thus, this includes medium voltage switchgears and their constitutive structures, such as circuit breakers, instrument transformers (current, voltage etc.), attached bus bars and cables and other components in and at the well-known "panels" (which are then combined in line-ups) and all other parts of the panels and in the panels.

A "switchgear" in this text may also, with same generality, refer to a low voltage panel and all of its parts.

Further, "switchgear" in this text may denote a high-voltage setup (substation) with circuit breakers and all its further components such as power lines, joints, transformers, voltage and current measurement devices.

BACKGROUND OF THE INVENTION

DE102014102509A1 describes that in a method for determining the temperature in the area of a high-voltage conductor, the temperature is measured on a measuring electrode and the temperature of the high-voltage conductor is deduced with the aid of an evaluation device.

US2011/156918A1 discloses a system for monitoring oil level and detecting leaks in power transformers, reactors, current and potential transformers, high voltage bushings and the like, notably for a system that through the use of sensors and other electronic components measures and monitors transformers and similar equipment in real time, filled with insulating oil, with greater precision and without need for floats or mobile mechanical parts, while presenting countless facilities in the sense of making level monitoring more reliable and safer, highlighting the level error calculations, oil leak detection alarm, excess oil detection alarm during the equipment filling process and calculation of tendencies of evolution for levels among other facilities.

EP3299783A1 relates to a method of thermal monitoring of a power device comprising an enclosure around a heat-generating component in contact with a circulating electrically insulating cooling fluid. The power device also comprises a first sensor performing measurements relating to power losses of the power device and a second sensor performing measurements of a reference temperature of the power device. The method comprises, in a first computer processing environment, executing a first algorithm based on design information about the power device for at least two different operation states of the power device. The method also comprises, from the first algorithm, deriving coefficients relating to heat transfer in the power device for the at least two operation states. The method also comprises, storing the derived coefficients in a database. The method also comprises connecting the database to a second computer processing environment. The method also comprises, during operation of the power device, the second computer processing environment receiving information about the measurements performed by the first sensor and the second sensor. The method also comprises, in the second computer processing environment, executing a second algorithm based on the stored coefficients and on the received measurement information for estimating at least one temperature of the heat generating component in the power device in real time.

ABB, Application Description AG/PS103-EN, "Infrared Temperature Monitoring System in Medium Voltage Switchgear", XP093019115, describes a device connected to infrared sensors for contactless temperature monitoring of a busbar and circuit breaker connections in a medium voltage switchgear.

Switchgear failures due to high temperatures at hot spots can have dramatic consequences, for example electric arcs / flash overs that can act almost like explosions. A method for monitoring and early warning before such incidents is highly needed, but is not available in an affordable form, which could be installed as a standard in every switchgear and give enough information on the switchgear health state. Presently, scheduled infrared monitoring is undertaken, where pictures are manually taken at given intervals, that can be spaced a long time apart. The locations of possible hot spots must be known in advance and must be optically accessible, which is often not the case.

There is a need to address these issues.

SUMMARY OF THE INVENTION

Therefore, it would be advantageous to have an improved switchgear monitoring system.

The object of the present invention is solved with the subject matter of the independent claim, wherein further embodiments are incorporated in the dependent claims.

Thus, actual temperatures can be output, and additionally or alternatively a warning flag could be raised if a temperature is exceeded, without actually outputting the temperature, or a remaining lifetime can be directly derived and output for example, The at least two locations are located on a conductor of the switchgear.

Thus, measurements can be made directly from metal surfaces, but also measurements can be made from for example a layer on metal that has a known or guaranteed emissivity, such as for example Kapton tape or a shrink tube. Also, measurements can be made from epoxy surfaces.

In other words, the temperature data that can include actual temperatures at a minimum of two points can be used to provide an estimate of a temperature at another location.

In this manner, a temperature at a location where it can be difficult to obtain temperatures can be determined from sensor data taken at other locations to determine the temperature.

In an example, not part of the invention, the determination of the temperature at the new location comprises utilization of the temperature information data for the at least two locations to determine temperatures at the at least two locations. In an example, the temperature information data for the at least two locations comprises temperatures at the at least two locations and the determination of the temperature at the new location comprises utilization of the temperatures at the at least two locations.

Thus, temperatures at measurement locations can be used to determine a temperature at a different location, where either sensor data itself is in the form of temperatures for two or more measured locations or sensor data for the two or more measured locations is provided to a processing unit that determines actual temperatures from that data. Temperature information, for example, can be in the form of radiation. Thus, an appropriate sensor can be used to determine a temperature of a body on the basis of the radiation emitted from the surface of that body.

In an example, not part of the invention, the new location is spaced a first distance from a first location of the at least two locations, and the new location is spaced a second distance from a second location of the at least two locations. The temperature at the new location is determined either as a temperature of the first location if the first distance is less than the second distance, or the temperature at the new location is determined as a temperature of the second location if the second distance is less than the first distance.

In other words, in effect a zeroth order approximation/extrapolation is made to determine the unknown temperature, where that temperature can be based on the nearest available temperature measurement.

In an example, determination of the temperature of the new location comprises a determination of a mean of a first temperature and a second temperature. The first temperature is a temperature at a first location of the at least two locations and the second temperature at a second location of the at least two locations.

In an example, not part of the invention, the new location is spaced a first distance from the first location of the at least two locations, and the new location is spaced a second distance from the second location of the at least two locations. The determination of the temperature of the new location comprises a weighted mean comprising utilization of the first and second distances and the first and second temperatures.

In this manner, the mean temperature can be weighted to take account of how close the measurement locations are to the unknown location as well as their temperatures. In an example, the temperature of the new location is determined as the temperature of the first location multiplied by the second distance added to the temperature of the second location multiplied by the first distance, with this total divided by the sum of the first and second distance. In this manner, a reasonable mean is provided that tends to the temperatures of the first or second position depending upon how close the unknown temperature of the new location is to the the first and second locations respectively.

In an example, not part of the invention, the first location is on one side of the new location and the second location is on the opposite side of the new location.

In other words, measurements are taken at two positions of the conductor, and a temperature of a third location between the two locations is determined, for example using an interpolation concept such as linear interpolation.

According to the invention, the determination of the temperature at the new location comprises utilization of a model of heat flow. Determination of the temperature at the new location comprises also a determination of a temperature at a first location of the at least two locations and a determination of a temperature at a second location of the at least two locations and comprises extrapolating a temperature to the new location. The first location and second location are on the same side of the conductor to the new location.

In other words, temperature extrapolation combined with heat flow modelling is used to determine hot spots in conductors of switchgear.

Thus, the new location is not between the first location and second location, but both of these locations are to one side of the new location. Then, temperature information for the first and second location is utilized along with a model of heat flow to extrapolate a temperature to the position of the new location in order to determine its temperature. To put this another way, a switchgear monitoring system is provided, that is suitable for low, medium, or high voltage systems. It detects temperature hot spots at positions where a direct measurement cannot be economically applied. A model-based approach is used for extrapolating temperature fields to the locations of interest. Data can then be post-processed in various ways, in order to give high-level monitoring information to the operating staff.

According to the invention, the determination of the temperature at the new location comprises a determination of a temperature at a third location of the at least two locations and a determination of a temperature at a fourth location of the at least two locations. Then, temperature information for the third and fourth location is utilized along with a model of heat flow to extrapolate a temperature to the position of the new location. The temperature at the new location is determined on the basis of the extrapolated temperature from the first and second locations and determined on the basis of the extrapolated temperature from the third and fourth locations. The third location and fourth location are on the same side of the conductor to the new location, and the third location is on the opposite side of new location to the first location.

In other words, temperature fields are extrapolated to a middle position from measured temperature information from either side of the middle position, where use is made of heat flow modelling to understand how the temperature field should be extrapolated. Then, a mean value for example can be determined for the temperature of the location for which measurement data is not available.

In an example of the invention, the extrapolation comprises one of: linear; polynomial; or exponential regression.

In an example of the invention, the model of heat flow comprises one or more of; an analytical model of the conductor; a finite element model; a finite element model plus model-order reduction; or information fusion with camera based imagery of the conductor.

In other words, temperatures can be calculated at hard to determine positions, where hot spots may occur and/or where temperature induced degradation may be expected to occur to adjacent materials, and this determination of the temperature of the conductor can take account of a mathematical model of the conductor, which can be augmented through imagery

According to the invention, the at least one sensor comprises at least one infrared sensor.

In an example of the invention, the processing unit is configured to determine a predicted residual lifetime of the electrical system, comprising utilisation of the temperature at the new location.

In this manner, the temperature data that can be of expected hotspots can be used to determine the lifetime of components of a switchgear in order that remedial action can be taken prior to failure.

To put this another way, temperature extrapolation can be used to determine temperatures of hot spots in conductors of switchgears, and this information can be used for lifetime prediction.

In an example of the invention, the determination of the predicted residual lifetime comprises utilisation of the Arrhenius equation.

In an example of the invention, the determination of the predicted residual lifetime comprises utilisation at least one heuristic rule.

In an example of the invention, the at least one heuristic rule comprises a rule that a temperature rise of 10 °C halves an expected lifetime.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

    Fig. 1 shows an example of the calculated curvatures of a thermal field under different physical situations; and
    Fig. 2 shows an example of zeroth order and linear extrapolations from observable areas to an unobserved area.

DETAILED DESCRIPTION OF EMBODIMENTS

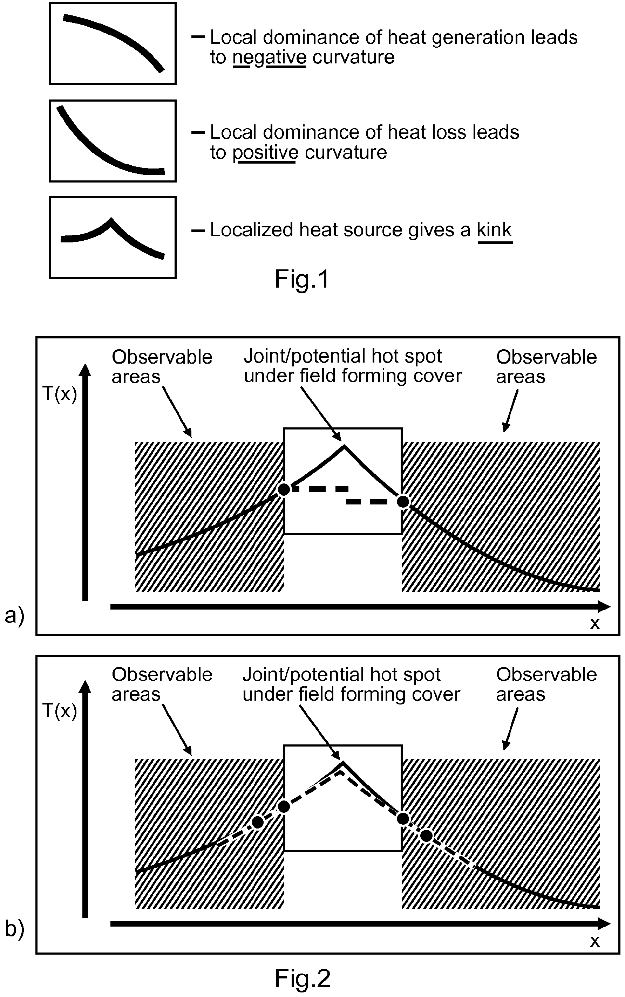

Figs. 1-2 shows temperature fields and how these can be extrapolated within a system for monitoring a switchgear in order to determine temperatures at positions not being monitored.

Such a system for monitoring a switchgear comprises at least one sensor, a processing unit, and an output unit. The at least one sensor is configured to acquire temperature information data for at least two locations of a conductor of a switchgear, that could have some form of covering. The at least one sensor is configured to provide the processing unit with the temperature information data for the at least two locations of the conductor. The processing unit is configured to determine a temperature at a new location of the conductor different to the at least two locations. The determination comprises utilization of the temperature information data for the at least two locations and the relative positions of the new location and the at least two locations. The output unit is configured to output the temperature at the new location and/or information based on the temperature at the new location.

According to an example, not part of the invention, the determination of the temperature at the new location comprises utilization of the temperature information data for the at least two locations to determine temperatures at the at least two locations.

According to an example, the temperature information data for the at least two locations comprises temperatures at the at least two locations and the determination of the temperature at the new location comprises utilization of the temperatures at the at least two locations.

According to an example, not part of the invention, the new location is spaced a first distance from a first location of the at least two locations, and the new location is spaced a second distance from a second location of the at least two locations. The temperature of the new location can then be determined either as a temperature of the first location if the first distance is less than the second distance, or the temperature of the new location can then be determined as a temperature of the second location if the second distance is less than the first distance.

According to an example, not part of the invention, the determination of the temperature of the new location comprises a determination of a mean of a first temperature at a first location of the at least two locations and a second temperature at a second location of the at least two locations.

In an example, not part of the invention, determination of the temperature of the new location comprises a determination of a function of a first temperature and a second temperature. The first temperature is a temperature at a first location of the at least two locations and the second temperature at a second location of the at least two locations.

According to an example, not part of the invention, the new location is spaced a first distance from the first location of the at least two locations, and the new location is spaced a second distance from the second location of the at least two locations. The determination of the temperature of the new location can then comprise a weighted mean using the first and second distances and the first and second temperatures.

In an example, not part of the invention, the temperature of the new location is determined as the temperature of the first location multiplied by the second distance added to the temperature of the second location multiplied by the first distance, with this total divided by the sum of the first and second distance. In this manner, a reasonable mean is provided that tends to the temperatures of the first or second position depending upon how close the new location is to the first and second locations.

According to an example, not part of the invention, the first location is on one side of the new location and the second location is on the opposite side of the new location.

According to the invention, determination of the temperature at the new location comprises utilization of a model of heat flow. The determination of the temperature at the new location comprises a determination of a temperature at a first location of the at least two locations and a determination of a temperature at a second location of the at least two locations. A temperature can then be extrapolated from the temperatures of the first and second locations to the new location, and in this case the first location and second location are on the same side of the conductor to the new location. Thus, the new location is not between the first and second locations.

According to the invention, the determination of the temperature at the new location comprises a determination of a temperature at a third location of the at least two locations and a determination of a temperature at a fourth location of the at least two locations. The determination comprises extrapolating a temperature to the new location from the third and fourth locations. The temperature at the new location is determined on the basis of the extrapolated temperature from the first and second locations and determined on the basis of the extrapolated temperature from the third and fourth locations. In this case, the third location and fourth location are on the same side of the conductor to the new location, and wherein the third location is on the opposite side of new location to the first location. Thus, extrapolated temperature fields to the new location from either side of the new location.

According to an example of the invention, the extrapolation comprises one of: linear; polynomial; or exponential regression.

According to an example of the invention, the model of heat flow comprises one or more of; an analytical model of the conductor; a finite element model; a finite element model plus model-order reduction; or information fusion with camera based imagery of the conductor.

According to the invention, the at least one sensor comprises at least one infrared sensor.

According to an example of the invention, the processing unit is configured to determine a predicted residual lifetime of the electrical system, comprising utilisation of the temperature at the new location.

In an example of the invention, one or more models for degradation are stored on the system, with degradation information for a number of relevant materials or material groups. The processing unit, then being provided with the material or material group relevant to the conductor being inspected can efficiently utilize the appropriate degradation information to provide lifetime data for the conductor itself, and/or for surrounding materials that can be degraded due to temperatures of the conductor.

According to an example of the invention, the determination of the predicted residual lifetime comprises utilisation of the Arrhenius equation.

According to an example of the invention, the determination of the predicted residual lifetime comprises utilisation at least one heuristic rule.

According to an example of the invention, the at least one heuristic rule comprises a rule that a temperature rise of 10°C halves an expected lifetime.

Therefore, with the help of model-based considerations and, if necessary, infrared measurements, the thermal state of the switchgear can be estimated at the locations of interest, mainly contact points and joints. The basic model that can be used for understanding heat flow and the temperature field $T(t,x)$ along bus bars, cables, or solid conducting parts such as breaker arms, (subsequently denoted mostly as ‴conductors‴) is the well-known heat equation

$$\partial_t T = \lambda \Delta T \qquad (1)$$

Where the diffusion coefficient $\lambda := k/c$, and where k is the quotient of heat conductivity and c is the heat capacitance of the conductor material. For the conductors, this equation is in many cases essentially 1+1-dimensional:

$$\partial_t T = \lambda \partial_x^2 T \qquad (2)$$

If temperature is measured at minimum at two points $x_1$ and $x_2$ along such a homogeneous conductor, and if the situation is approximately stationary, this can be used to give an estimate of the complete temperature field along the conductor. In this case the temperature profile is expected to be a straight line:

$$T(x) = T(x_1) + (x - x_1) \cdot \frac{T(x_2) - T(x_1)}{x_2 - x_1} \qquad (3)$$

A third temperature can then be calculated, for example at a point where hot spots may occur or where temperature-induced degradation may occur to adjacent materials. The calculation method can rely on:

1. an estimated analytical model of the bus-bar (or other body of interest), tuned via experiments and/or
2. a finite-element model, plus model-order reduction and/or
3. information-fusion with a picture from an optical camera (e.g. automatic detection of parts, which can be included in the model).

However, convective cooling and Joule heating can apply to the conductor, and this case modelling can account for such heat generation and dissipation. The heat equation in the copper conductors can, since temperature variations across the conductors are usually still very small, also be approximated as a more detailed 1+1-dimensional partial differential equation:

$$c_{Cu} \rho_{Cu} A \partial_t T = \kappa_{Cu} A \partial_x^2 T \quad + \quad [r_{Cu}(T) + \tau(T) \cdot \delta(x - x_0)] \frac{I^2}{A} \qquad (4)$$
$$- \quad U h (T - T_0) - U e \sigma (T^4 - T_0^4)$$

with the following parameter definitions:

- cCu: specific heat capacity of copper
- $\rho$Cu: density of copper
- A: cross section area of the conductor
- $\kappa$Cu: heat conductivity of copper
- I: current through the cross section
- rCu: specific electrical resistivity of copper
- $\tau(T)$: inverse of contact conductivity per area
- U: circumference length of the conductor
- e: emissivity of the conductor surface
- $\sigma$: Stefan-Boltzmann constant

With slightly re-defined resistance measures, equation (4) can be written as:

$$c_{Cu} \rho_{Cu} A \partial_t T = \kappa_{Cu} A \partial_x^2 T \quad + \quad (\partial_x R_{bar}(T) + R_c(T) \cdot \delta(x - x_0)) \cdot I^2 \qquad (5)$$
$$- \quad U h (T - T_0) - U e \sigma (T^4 - T_0^4)$$

with the same definitions as above, and additionally:

- $\partial_x R_{bar}(T)$: electrical resistivity of copper bar per length

- Rc(T): electrical resistivity of contact

Each term in the equation represents a thermal power per length, i.e. from left to right:

1. Accumulated heat
2. Axial heat flow balance
3. Joule heat generation
4. Convective heat loss
5. Radiative heat loss

Taking the static case, it can be found that the curvature of the thermal field gives an indication if local generation or local dissipation of heat is dominating at the corresponding position. From equation 5 the relations as shown in Fig. 1 can be directly found, where Fig. 1 shows the categorization of thermodynamic scenarios along a conducting bar or cable or solid part.

Having understood the qualitative thermal behavior along the conductor, the thermal information on extended areas can be used, for example as determined by infrared (IR) arrays, in order to extrapolate and estimate the field behavior in inaccessible areas. This can be done in various ways. A zeroth-order approximation would mean to estimate T in a shielded area as being equal to the nearest available T-measurement results, or as a reasonable mean of them. However the estimate can be significantly improved if at least a linear extrapolation is used, which, in turn is economically feasible if there is an extended measurement such as infrared. These different methodologies are represented schematically in Fig. 2, where a Zeroth order approximation is shown at the top a) and a linear approximation is shown at the bottom b) of hot spot temperature, highlighting the improved estimate provided through a linear approximation.

However, a number of different extrapolation method can be utilized, for example polynomial, exponential or linear regressions (for more details see Xin Yan. Linear Regression Analysis: Theory and Computing, volume ISBN 9789812834119. 2009). A very effective parabolic approximation of the thermal field can be found if the position of the hot spot can be assumed to be at a known joint (e.g. with coordinate taken as $x = 0$) and the *T*-field, together with its derivative $dT/dx$ is measured at a certain distance $x_0$. The hot spot is assumed to be at the vertex of the parabola. The *T*-field between $x = 0$ and $x = x_0$ is then of the form:

$$T(x) = T_{hotspot} - a \cdot x^2$$

The measurement then delivers two equations for the two unknowns $T_{hotspot}$ and a:

$$T(x_0) = T_{hotspot} - a \cdot x_0^2$$

$$\frac{dT}{dx}(x_0) = -2a \cdot x_0$$

which can easily be solved.

The formulae above are mainly valid for bus bars or other quasi-one-dimensional conductive structures.

They can be used, therefore for many current-carrying, essentially one-dimensional structures in switchgears, in the sense as the latter are defined above. Examples for this are all connecting wires, cables and bus bars connecting the components of the switchgears.

The above methodology may be used in the medium voltage switchgears whose operational voltage is often defined to be in the range between 1000 V and 36000 V. It may also be used for switchgears in the high voltage range above approx 36 kV. It may also be used in low voltage switchgears, e.g. in low voltage cabinets where voltage is lower or equal approx 1000 V.

The temperatures Ti or some temperature information f(Ti), which has a one-to-one correspondence to the temperatures Ti, such that the Ti can be concluded from f(Ti), can be measured at the at least to points in various ways:

1) One or several devices may sense infrared radiation from the at least two points and transmit this information to a signal processing unit. This can be the well known technologies in the field (e.g. thermal/bolometric or quantum sensors)
2) Resistance thermometers
3) Thermocouples, based on thermo-electric effect

4) Surface acoustic wave sensors

There are at least two very interesting results of these procedures: first, they give an estimate for the maximum temperature $T_{hotspot}$ in the shielded, inaccessible area. Second, they give an estimate of the complete thermal field $T_{extrapolated}(x)$ as it extends into the shielded area. Critical points, where hot spots can occur, are in particular the joints of two or more conductors. There, contact areas with locally reduced electrical conductivity can be found and, as a consequence, energy loss in form of heat. Both of this information can be used as the basis for determining one or more e□ective temperatures $T_{eff}$, which can be spatially varying. Such a $T_{eff}(x)$ is to be understood as the temperature level to be entered into one or several lifetime models of adjacent materials, and possibly in a lifetime model for the complete switchgear.

Typically, these lifetime models follow the theory of Arrhenius for the T-dependence of the degradation constant:

$$k = A \cdot \exp\left(-\frac{E_a}{RT}\right)$$

where $T$ is the effective temperature, $R$ is the ideal gas constant, and $E_a$ is the material dependent molar activation energy of the degradation reaction. $A$ is the number of particle collisions per time in the material, and $k$ is the number of particle reactions (degradations) per time.

Heuristic rules can also be used to determine lifetimes, such as the one of Montsinger stating that:

*a temperature rise of 10°C halves the expected lifetime of an electrical system.*

The Arrhenius theory can also be used to calculate the lifetime itself via a formula of the type

$$L = C \cdot \exp\left(\frac{B}{T}\right]$$

with material-dependent constants $C$ and $B$, or, by simple re-formulation as "Arrhenius lines or an Arrhenius plot'":

$$\ln L\left(\frac{1}{T}\right) = \ln C + \frac{B}{T}$$

For more information on this see: T.W. Dakin. Electrical insulation deterioration treated as a chemical rate phenomenon. AIEE Trans., 67:113-122, 1948.

Furthermore, the calculated effective temperatures may be used as input for phase temperature comparisons, as recently proposed in EP 3 171 469 A1 and in the paper by Luca Cavalli, Marco Egman, and Tomas Kozel. "Switchgear temperature monitoring: Early hot spot detection enabling condition-based maintenance" , ABB Whitepaper, 2016.

**Claims**

1. A switchgear monitoring system, the system comprising:

   - at least one sensor;
   - a processing unit; and
   - an output unit;
   wherein the at least one sensor comprises at least one infrared sensor; wherein, the at least one infrared sensor is configured to acquire temperature information data for at least a first location and a second location of a conductor of a switchgear;
   wherein, the at least one infrared sensor is configured to provide the processing unit with the temperature information data of the first location and second location;
   wherein, the processing unit is configured to determine a temperature at a new location of the conductor of the switchgear different to the first location and second location;
   wherein the first location and the second location are on the same side of the conductor to the new location;
   wherein, the output unit is configured to output the temperature at the new location and/or information based on the temperature at the new location; **characterized in that**
   the determination of the temperature at the new location comprises the extrapolation of a temperature at a third location of the conductor and the extrapolation of a temperature at a fourth location of the conductor based on the temperatures of the at least first location and second location and using the extrapolated temperature information of the third location and the fourth location with a model of heat flow to determine the temperature at the new location.

2. System according to claim 1, wherein the extrapolation comprises one of: linear; polynomial; or exponential regression.

3. System according to any of claims 1-2, wherein the model of heat flow comprises one or more of: an analytical model of the conductor; a finite element model; a finite element model plus model-order reduction; or information fusion with camera based imagery of the conductor.

4. System according to an of claims 1-3, wherein the processing unit is configured to determine a predicted residual lifetime of the electrical system, comprising utilisation of the temperature at the new location.

5. System according to claim 4, wherein the determination of the predicted residual lifetime comprises utilisation of the Arrhenius equation.

6. System according to claim 4, wherein the determination of the predicted residual lifetime comprises utilisation at least one heuristic rule.

7. System according to claim 6, wherein the at least one heuristic rule comprises a rule that a temperature rise of 10 °C halves an expected lifetime.

**Patentansprüche**

1. Schaltanlagen-Überwachungssystem, das System umfassend:

   - mindestens einen Sensor;
   - eine Verarbeitungseinheit; und
   - eine Ausgabeeinheit;
   wobei der mindestens eine Sensor mindestens einen Infrarotsensor umfasst; wobei der mindestens eine Infrarotsensor eingerichtet ist, Temperaturinformationsdaten für mindestens einen ersten Ort und einen zweiten Ort eines Leiters einer Schaltanlage zu erfassen;
   wobei der mindestens eine Infrarotsensor eingerichtet ist, die Verarbeitungseinheit mit den Temperaturinformationsdaten des ersten Ortes und des zweiten Ortes zu versorgen;
   wobei die Verarbeitungseinheit eingerichtet ist, eine Temperatur an einem neuen Ort des Leiters der Schaltanlage zu bestimmen, der sich von dem ersten Ort und dem zweiten Ort unterscheidet;
   wobei der erste Ort und der zweite Ort auf derselben Seite des Leiters wie der neue Ort liegen;
   wobei die Ausgabeeinheit eingerichtet ist, die Temperatur am neuen Ort und/oder darauf basierende Informationen auszugeben;
   charakterisiert dadurch, dass die Bestimmung der Temperatur am neuen Ort die Extrapolation einer Temperatur an einem dritten Ort des Leiters und die Extrapolation einer Temperatur an einem vierten Ort des Leiters auf der Grundlage der Temperaturen des mindestens ersten Ortes und des zweiten Ortes umfasst und dass die extrapolierten Temperaturinformationen des dritten und vierten Ortes mit einem Wärmeflussmodell zur Bestimmung der Temperatur am neuen Ort verwendet werden.

2. System gemäß Anspruch 1,
   wobei die Extrapolation entweder eine lineare, eine polynomiale oder eine exponentielle Regression umfasst.

3. System gemäß einem der Ansprüche 1 bis 2,
   wobei das Wärmeflussmodell eines oder mehrere der folgenden Modelle umfasst:

   ein analytisches Modell des Leiters; ein Finite-Elemente-Modell;
   ein Finite-Elemente-Modell plus Modellordnungsreduktion; oder eine Informationsfusion mit kamerabasierten Bildaufnahmen des Leiters.

**4.** System gemäß einem der Ansprüche 1 bis 3, wobei die Verarbeitungseinheit eingerichtet ist, eine vorhergesagte Restlebensdauer des elektrischen Systems zu bestimmen, wobei die Temperatur am neuen Ort verwendet wird.

**5.** System gemäß Anspruch 4, wobei die Bestimmung der vorhergesagten Restlebensdauer die Verwendung der Arrhenius-Gleichung umfasst.

**6.** System gemäß Anspruch 4, wobei die Bestimmung der vorhergesagten Restlebensdauer die Verwendung mindestens einer heuristischen Regel umfasst.

**7.** System gemäß Anspruch 6, wobei die mindestens eine heuristische Regel eine Regel umfasst, wonach ein Temperaturanstieg von 10 °C eine erwartete Lebensdauer halbiert.


## Revendications

**1.** Système de surveillance d'un appareillage de commutation, le système comprenant :

- au moins un capteur ;
- une unité de traitement ; et
- une unité de sortie ;

l'au moins un capteur comprenant au moins un capteur infrarouge ;

l'au moins un capteur infrarouge étant configuré pour acquérir des données d'information sur la température pour au moins un premier emplacement et un deuxième emplacement d'un conducteur d'un appareillage de commutation ;

l'au moins un capteur infrarouge étant configuré pour fournir à l'unité de traitement les données d'information sur la température du premier emplacement et du deuxième emplacement ;

l'unité de traitement étant configurée pour déterminer une température à un nouvel emplacement du conducteur de l'appareillage de commutation différent du premier emplacement et du deuxième emplacement ;

le premier emplacement et le deuxième emplacement se trouvant du même côté du conducteur que le nouvel emplacement ;

l'unité de sortie étant configurée pour émettre la température au nouvel emplacement et/ou des informations basées sur la température au nouvel emplacement ;

**caractérisé en ce que**

la détermination de la température au nouvel emplacement comprend l'extrapolation d'une température à un troisième emplacement du conducteur et l'extrapolation d'une température à un quatrième emplacement du conducteur sur la base des températures des au moins premier emplacement et deuxième emplacement, et l'utilisation des informations de température extrapolées du troisième emplacement et du quatrième emplacement avec un modèle de flux thermique pour déterminer la température au nouvel emplacement.

**2.** Système selon la revendication 1, l'extrapolation comprenant l'une des régressions suivantes : linéaire, polynomiale ou exponentielle.

**3.** Système selon l'une quelconque des revendications 1 et 2, le modèle de flux thermique comprenant un ou plusieurs des éléments suivants : un modèle analytique du conducteur ; un modèle par éléments finis ; un modèle par éléments finis plus une réduction de l'ordre du modèle ; ou une fusion d'informations avec des images du conducteur prises par une caméra.

**4.** Système selon l'une quelconque des revendications 1 à 3, l'unité de traitement étant configurée pour déterminer une durée de vie résiduelle prévue du système électrique, comprenant l'utilisation de la température au nouvel emplacement.

**5.** Système selon la revendication 4, la détermination de la durée de vie résiduelle prévue comprenant l'utilisation de l'équation d'Arrhenius.

**6.** Système selon la revendication 4, la détermination de la durée de vie résiduelle prévue comprenant l'utilisation d'au moins une règle heuristique.

**7.** Système selon la revendication 6, l'au moins une règle heuristique comprenant une règle selon laquelle une augmentation de température de 10 °C réduit de moitié la durée de vie prévue.

— Local dominance of heat generation leads to <u>negative</u> curvature

— Local dominance of heat loss leads to <u>positive</u> curvature

— Localized heat source gives a <u>kink</u>

Fig.1

a)

b)

Fig.2

**EP 3 671 997 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102014102509 A1
- US 2011156918 A1
- EP 3299783 A1
- EP 3171469 A1

**Non-patent literature cited in the description**

- **XIN YAN**. *Linear Regression Analysis: Theory and Computing,*, ISBN ISBN 9789812834119. 2009
- **T.W. DAKIN**. Electrical insulation deterioration treated as a chemical rate phenomenon. *AIEE Trans.*, 1948, vol. 67, 113-122
- **LUCA CAVALLI** ; **MARCO EGMAN** ; **TOMAS KOZEL**. Switchgear temperature monitoring: Early hot spot detection enabling condition-based maintenance. *ABB Whitepaper*, 2016